# EUROPÄISCHE PATENTSCHRIFT

(11) **EP 3 663 618 B1**
(45) Veröffentlichungstag und Bekanntmachung des Hinweises auf die Patenterteilung: **07.02.2024**
(21) Anmeldenummer: 18465630.4
(22) Anmeldetag: 06.12.2018
(51) Int. Cl.: F16K 11/078, F16K 11/087, F16K 27/06

(54) **STELLVENTIL**
CONTROL VALVE
VANNE DE RÉGULATION

(43) Veröffentlichungstag der Anmeldung: 10.06.2020
(73) Patentinhaber: Vitesco Technologies GmbH, 93055 Regensburg (DE)
(72) Erfinder: Plaeru, George, 300620 Timisoara (RO); Pop, Daniel-Marius, 437315 Suciu de Sus (RO); Popa, Alexandru, 240048 Rimnicu Vilcea (RO); Belin, Cosmin, 300282 Timisoara (RO)
(74) Vertreter: Vitesco Technologies

(56) Entgegenhaltungen:
- EP-A1- 2 909 514
- EP-A2- 2 017 520
- WO-A2-2013/120068
- CN-Y- 200 958 632
- NL-A- 7 107 241
- US-A- 3 101 752
- US-A- 3 494 590
- US-A- 3 563 265
- US-A- 4 260 131
- US-A1- 2014 049 042

## Beschreibung

Die vorliegende Erfindung betrifft ein Stellventil, insbesondere für druckbeaufschlagte Fluide, ein Hydrauliksystem und ein Kraftfahrzeug mit dem Stellventil, insbesondere zum Steuern eines hydraulischen Temperiersystems des Kraftfahrzeugs, sowie ein Verfahren zum Montieren des Stellventils.

Die US 3 563 265 A betrifft ein Fluidventil mit Bohrungen, einem Kugelventilelement, Befestigungsmitteln sowie Lagerelementen und O-Ringen, die zwischen diesen Lagerelementen und flachen Stirnseiten der Befestigungsmittel angeordnet sind.

Die US 4 260 131 A betrifft ein Kugelventil, bei dem Ventilsitze zwischen Dichtungen und einem Stellglied angeordnet sind.

Aus der EP 2 017 520 A2 ist eine Befestigungsvorrichtung zur Befestigung eines Gehäusebauteiles, insbesondere eines solchen eines Thermostaten, an einem Funktionselement einer Brennkraftmaschine bekannt, wobei das Gehäusebauteil ein daran festes Anschlussteil und das Funktionselement ebenfalls ein daran festes Anschlussteil aufweisen, die beiden Anschlussteile zur lösbaren und flüssigkeitsdichten Steckverbindung miteinander ausgebildet sind, und ferner ein Sicherungselement vorgesehen ist, mittels dessen die beiden zusammengesteckten Anschlussteile zusammengehalten werden.

NL 7 107 241 A beschreibt ein Stellventil mit den Merkmalen des Oberbegriffs von Anspruch 1.

Aufgabe der vorliegenden Erfindung ist es, ein Stellventil, insbesondere dessen Performance und/oder Montage, zu verbessern. Diese Aufgabe wird durch ein Stellventil mit den Merkmalen des Anspruchs 1 gelöst. Ansprüche 9, 10 stellen ein Hydrauliksystem bzw. Kraftfahrzeug mit einem hier beschriebenen Stellventil bzw. ein Verfahren zum Montieren eines hier beschriebenen Stellventils unter Schutz. Die Unteransprüche betreffen vorteilhafte Weiterbildungen.

Nach einer Ausführung der vorliegenden Erfindung weist ein Stellventil ein ein- oder mehrteiliges Gehäuse, insbesondere mit wenigstens einer Kavität, in einer Ausführung einen ein- oder mehrteiligen Gehäusegrundkörper und einen Deckel, der wenigstens eine Kavität des Gehäusegrundkörpers verschließt, auf.

In einer Ausführung weist das Gehäuse, insbesondere der Gehäusegrundkörper und/oder Deckel, Kunststoff auf, ist in einer Ausführung hieraus hergestellt. Hierdurch kann in einer Ausführung eine Abdichtung des Gehäuses vorteilhaft verbessert werden.

Nach einer Ausführung der vorliegenden Erfindung weist das Gehäuse, insbesondere der Gehäusegrundkörper, wenigstens zwei, insbesondere wenigstens drei, in einer Ausführung wenigstens, insbesondere genau, vier Anschlüsse, in einer Ausführung rohr(stutzen)artige Anschlüsse, auf, die in einer Ausführung jeweils eine, in einer Ausführung gerade, Durchgangsöffnung aufweisen, welche in einer Ausführung einen kreisförmigen Querschnitt aufweist.

In einer Ausführung sind ein oder mehrere der wenigstens drei Anschlüsse im Betrieb verschlossen, insbesondere durch Blindstopfen.

Hierdurch kann in einer Ausführung das gleiche Stellventil vorteilhaft wahlweise für zwei oder mehr Anschlüsse verwendet werden.

Nach einer Ausführung der vorliegenden Erfindung ist/sind bzw. wird/werden an dem Gehäuse, insbesondere dem Gehäusegrundkörper, in einer Ausführung an dessen Außenseite, ein oder mehrere Verbindungselement(e) befestigt, das bzw. die (jeweils) ein, in einer Ausführung integral ausgebildetes, Innenrohr aufweist/aufweisen, das, insbesondere dabei und/oder in einer Axial- bzw. Längsrichtung des Innenrohrs und/oder jeweiligen Anschlusses, in einen der Anschlüsse, insbesondere eine Durchgangsöffnung des Anschlusses, eingeführt ist bzw. wird.

In einer Ausführung weist eine in Einführrichtung vordere Stirnseite und/oder eine in den (jeweiligen) Anschluss eingeführte Mantelfläche des bzw. der Innenrohre(s) (jeweils) einen, insbesondere maximalen, Außendurchmesser auf, der kleiner als ein, insbesondere minimaler, Innendurchmesser des jeweiligen Anschlusses, insbesondere dessen Durchgangsöffnung ist, in einer Ausführung mit dieser eine Übergangs- oder Spielpassung bildet. In einer Ausführung weist/weisen das bzw. die Innenrohre(e jeweils) wenigstens abschnittsweise eine kreiszylinderförmige Außenkontur, insbesondere einen kreisringförmigen Querschnitt, auf.

Nach einer Ausführung der vorliegenden Erfindung weist das Stellventil ein ein- oder mehrteiliges beweglich( angeordnet-, insbesondere gelagert)es Stellglied mit einer ersten Passage auf, die in einer ersten Stellgliedstellung einen ersten und einen zweiten dieser Anschlüsse, insbesondere darin eingeführte Innenrohre der an dem Gehäuse befestigten Verbindungselemente, miteinander, insbesondere fluidtechnisch, verbindet und in wenigstens einer weiteren Stellgliedstellung diese beiden Anschlüsse bzw. Innenrohre nicht (fluidtechnisch) miteinander verbindet.

In einer Ausführung ist bzw. wird das Stellglied in einer bzw. der Kavität des Gehäuse(grundkörper)s angeordnet, insbesondere aufgenommen.

Hierdurch kann in einer Ausführung eine Montage und/oder Verstellung des Stellglieds verbessert werden.

Nach einer Ausführung der vorliegenden Erfindung ist bzw. wird (jeweils) eine ein- oder mehrteilige Dichtung zwischen dem bzw. einem der Innenrohr (e) und dem Stellglied angeordnet, in einer Ausführung durch das Einführen dieses Innenrohres in den entsprechenden Anschluss.

Die Dichtung ist in einer Ausführung an einer stellgliedseitigen Stirnseite bzw. Öffnung des Innenrohres angeordnet und/oder dichtet in einer Ausführung das Innenrohr an dem Stellglied, in einer Ausführung an dessen Außenkontur, ab, insbesondere gegen durch das Stellglied gesteuertes, insbesondere druckbeaufschlagtes, Fluid, bzw. ist hierzu vorgesehen, insbesondere eingerichtet bzw. wird hierzu verwendet.

Hierdurch kann in einer Ausführung die Montage der Dichtung(en) und/oder die Abdichtung des Stellglieds verbessert werden.

In einer Ausführung wird/werden das bzw. eines oder mehrere der Verbindungselement(e) an dem Gehäuse befestigt bzw. das bzw. eines oder mehrere der Innenrohr(e), insbesondere zusammen mit der (jeweiligen) Dichtung, eingeführt, nachdem das Stellventil in der Kavität angeordnet worden ist.

Hierdurch kann in einer Ausführung eine Montage weiter verbessert und insbesondere das Risiko einer Beschädigung der Dichtung (en) reduziert werden.

In einer Ausführung ist/sind bzw. wird/werden die bzw. eine oder mehrere der Dichtung(en jeweils) zwischen dem (jeweiligen) Innenrohr und dem Stellglied, in einer Ausführung elastisch, komprimiert.

Zusätzlich oder alternativ ist/sind bzw. wird/werden die bzw. eine oder mehrere der Dichtung(en jeweils) an dem (jeweiligen) Innenrohr befestigt, in einer Ausführung vor dem Einführen und/oder zerstörungsfrei lösbar oder nicht zerstörungsfrei lösbar und/oder reib-, form- und/oder stoffschlüssig, insbesondere durch Verkleben, Verschweißen und/oder Anformen.

Hierdurch kann in einer Ausführung jeweils, insbesondere in Kombination, die (De)Montage der Dichtung(en) und/oder die Abdichtung des Stellglieds (weiter) verbessert werden.

In einer Ausführung weist/weisen die bzw. eine oder mehrere der Dichtung(en jeweils) Kunststoff, insbesondere ein Elastomer, und/oder eine, in einer Ausführung stellgliedseitig( angeordnet)e, Beschichtung auf, die in einer Ausführung eine (verglichen mit einem Grundmaterial der Dichtung) reibungsmindernde Beschichtung, insbesondere Teflon oder dergleichen, aufweist, insbesondere hieraus bestehen kann.

Hierdurch kann in einer Ausführung jeweils, insbesondere in Kombination, die Abdichtung und/oder Verstellung des Stellglieds (weiter) verbessert werden.

In einer Ausführung weist/weisen das bzw. eines oder mehrere der Verbindungselement(e jeweils) einen, in einer Ausführung ringartigen, Flansch, der den (entsprechenden) Anschluss übergreift, und/oder einen außerhalb des Gehäuses liegenden, in einer Ausführung geriffelten, Verbindungsbereich auf, an dem in einer Ausführung ein Schlauch befestigt ist bzw. wird bzw. der hierzu vorgesehen, insbesondere eingerichtet ist bzw. verwendet wird.

Hierdurch kann in einer Ausführung die Befestigung des Verbindungselements an dem Gehäuse bzw. eine Anbindung einer Zu- bzw. Ableitung, insbesondere eines Schlauches, an das Stellventil verbessert werden.

In einer Weiterbildung ist bzw. wird zwischen dem Flansch und dem Anschluss ein ein- oder mehrteiliges Dichtmittel, insbesondere wenigstens eine Ringdichtung, angeordnet. Hierdurch kann ein Fluidaustritt zwischen Innenrohr und Gehäuse vorteilhaft vermieden bzw. reduziert werden.

Zusätzlich oder alternativ ist/sind bzw. wird/werden in einer Ausführung die bzw. eine oder mehrere der Verbindungselement(e jeweils) zerstörungsfrei lösbar an dem Gehäuse befestigt, in einer Ausführung form- und/oder reibschlüssig.

In einer Ausführung ist/sind bzw. wird/werden die bzw. eine oder mehrere der Verbindungselement(e jeweils) mittels einer, in einer Ausführung selbsttätig verriegelnden, Rastverbindung, die in einer Ausführung ein oder mehr, insbesondere elastische, Rast-, insbesondere Verriegelungselement(e), insbesondere Feder (n), aufweist, an dem Gehäuse befestigt. Das bzw. eines oder mehrere der Verbindungselement (e) kann insbesondere (jeweils) in der Art eines Schnellkupplungsstutzens zum selbsttätig verriegelnden, zerstörungsfrei lösbaren Anbinden eines Schlauches ausgebildet sein.

Hierdurch kann in einer Ausführung die (De)Montage des Verbindungselements bzw. Schlauchs an dem Gehäuse (weiter) verbessert werden.

In einer Ausführung ist/sind bzw. wird/werden die bzw. eine oder mehrere der Verbindungselement(e jeweils) dauerhaft bzw. nicht zerstörungsfrei lösbar an dem Gehäuse befestigt, in einer Ausführung stoffschlüssig.

Hierdurch kann in einer Ausführung eine Abdichtung (weiter) verbessert werden.

In einer Ausführung wird das Stellglied in die Stellgliedstellungen, insbesondere also in die erste Stellgliedstellung und die wenigstens eine weitere Stellgliedstellung bzw. die nachfolgend genannten Stellgliedstellungen, bzw. zwischen diesen verdreht, in einer Ausführung um eine Drehachse, die in einer Ausführung mit einer (Längs) Achse bzw. Axialrichtung des bzw. eines oder mehrerer der Innenrohe (jeweils) einen Winkel einschließt, der wenigstens 45°, insbesondere wenigstens 60°, in einer Ausführung wenigstens 75°, und/oder höchstens 135°, insbesondere höchstens 120°, in einer Ausführung höchstens 105°, insbesondere also, wenigstens im Wesentlichen, 90°, beträgt, bzw. ist hierzu eingerichtet. In einer Weiterbildung weist wenigstens ein die Dichtung(en) kontaktierender Bereich des Stellglieds eine zu dieser Drehachse rotationssymmetrische Außenkontur auf.

Hierdurch kann das Stellventil in einer Ausführung besonders kompakt ausgebildet und/oder seine Verstellung verbessert werden, insbesondere verschiedene Stellventilschalt- bzw. Stellgliedstellungen kompakt(er) und/oder (einfach(er)) durch einen Drehantrieb, insbesondere Elektromotor, angefahren werden.

In einer Ausführung verbindet die erste Passage des Stellglieds in (einer) der weiteren Stellgliedstellung(en) den ersten Anschluss mit einem dritten der Anschlüsse des Gehäuses, insbesondere also den ersten Anschluss statt mit dem zweiten Anschluss mit einem dritten der Anschlüsse.

Zusätzlich oder alternativ weist das Stellglied eine zweite Passage auf, die in der ersten Stellgliedstellung einen bzw. den dritten und einen vierten der Anschlüsse des Gehäuses miteinander verbindet und in wenigstens einer anderen Stellgliedstellung diese beiden Anschlüsse nicht miteinander verbindet.

Zusätzlich oder alternativ sperrt in einer Ausführung das Stellglied in (einer, gegebenenfalls anderen,) der weiteren Stellgliedstellung(en) den ersten Anschluss und in einer Weiterbildung auch den zweiten, dritten und/oder vierten Anschluss, gegen alle anderen Anschlüsse des Gehäuses.

Hierdurch können in einer Ausführung jeweils, insbesondere in Kombination, Fluid(system)e besonders vorteilhaft, insbesondere kompakt und/oder variabel, gesteuert werden.

Das Stellventil kann, insbesondere aufgrund der Dichtung (en), in einer Ausführung mit besonderem Vorteil für (das Steuern von) (über)druckbeaufschlagte(n) Fluide(n), insbesondere Flüssigkeiten verwendet bzw. hierzu vorgesehen bzw. eingerichtet sein bzw. werden, ohne dass die vorliegende Erfindung hierauf beschränkt ist.

Insbesondere aufgrund eines oder mehrerer der vorgenannten Merkmale bzw. Vorteile kann das Stellventil in einer Ausführung mit besonderem Vorteil in Hydrauliksystemen und Kraftfahrzeugen verwendet bzw. hierzu vorgesehen, insbesondere eingerichtet, sein bzw. werden, insbesondere zum Steuern eines hydraulischen Temperiersystems des Kraftfahrzeugs, ohne dass die vorliegende Erfindung hierauf beschränkt ist.

In einer Ausführung ist/sind die Dichtung (en), die zwischen dem bzw. den Innenrohr(en) und dem Stellglied angeordnet ist/sind, ganz oder teilweise in der Kavität des Gehäuse(grundkörper)s, insbesondere in einem Spalt zwischen Stellglied und (Innen)Wandung der Kavität angeordnet.

Hierdurch kann in einer Ausführung die Deformation der Dichtung(en) und damit deren Dichtwirkung und/oder Montage (weiter) verbessert werden.

In einer Ausführung sind die Anschlüsse in einer Stellrichtung des Stellglieds, insbesondere in einer Umfangsrichtung um die Drehachse des Stellglieds, wenigstens im Wesentlichen, äquidistant verteilt und/oder liegen die beiden Anschlüsse eines oder mehrerer Paare der Anschlüsse einander (jeweils) gegenüber.

Hierdurch kann in einer Ausführung das Stellventil kompakt(er) ausgebildet und/oder vorteilhaft geschaltet werden.

Weitere Vorteile und Merkmale ergeben sich aus den Unteransprüchen und den Ausführungsbeispielen. Hierzu zeigt, teilweise schematisiert:
- Fig. 1:: ein Stellventil nach einer Ausführung der vorliegenden Erfindung in einem Schnitt senkrecht zu einer Drehachse seines Stellglieds;
- Fig. 2A-2C:: mehrere Stellgliedstellungen des Stellglieds; und
- Fig. 3:: einen Schnitt durch einen Teil des Stellventils, der die Drehachse enthält.

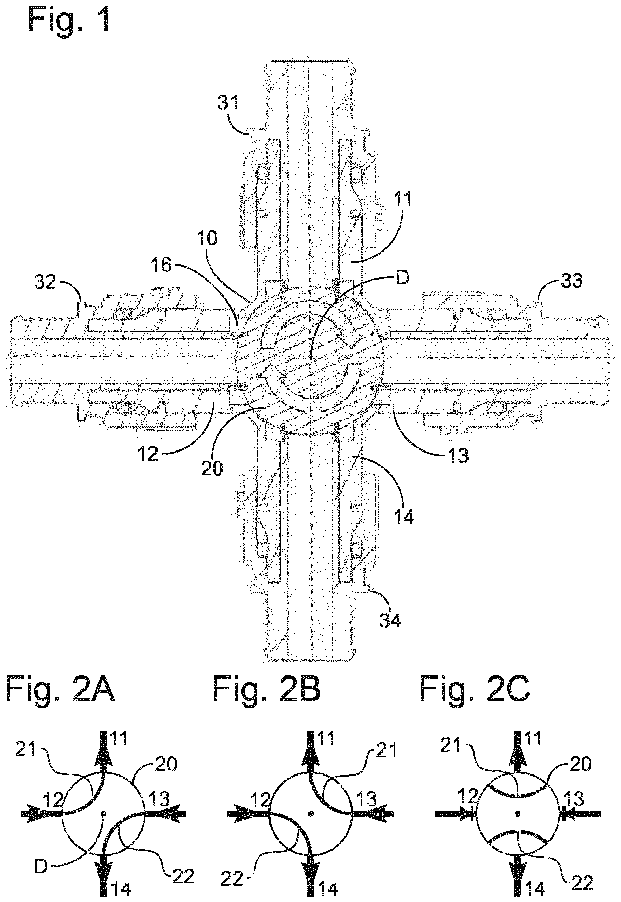

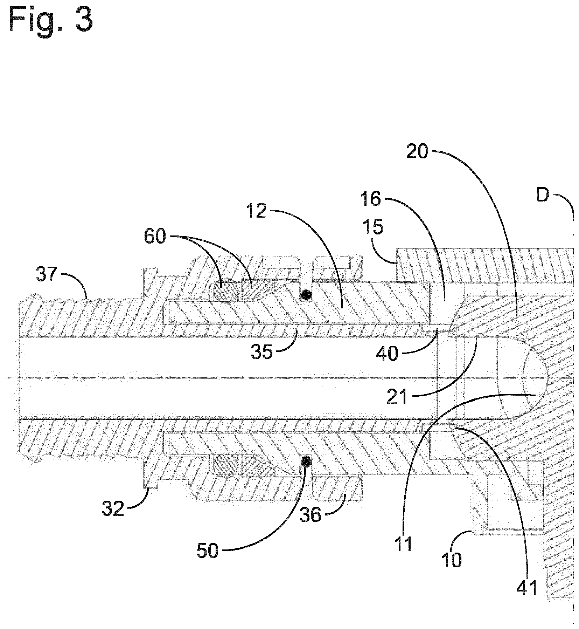

Fig. 1 zeigt ein Stellventil nach einer Ausführung der vorliegenden Erfindung in einem Schnitt senkrecht zu einer Drehachse D seines Stellglieds, Fig. 3 einen hierzu senkrechten Schnitt durch die in Fig. 1 linke Hälfte des Stellventils, der diese Drehachse enthält.

Das Stellventil weist ein Gehäuse mit einem Gehäusegrundkörper 10 und einem Deckel 15 auf, der eine Kavität 16 verschließt, in der ein zur Drehachse D rotationssymmetrisches Stellglied 20 um die Drehachse D unbegrenzt verdrehbar gelagert ist.

Das Stellglied 20 weist eine erste Passage 21 und eine zweite Passage 22 auf, wie in den Fign. 2 symbolisiert.

Der Gehäusegrundkörper 10 weist vier in Umfangsrichtung um die Drehachse äquidistant verteilte, baugleiche Anschlüsse 11-14 auf, die in den Fign. 2 symbolisiert sind und von denen einer im Schnitt der Fig. 3 dargestellt ist.

An jedem dieser Anschlüsse 11-14 ist bzw. wird jeweils ein baugleiches Verbindungselement 31-34, das einen geriffelten Verbindungsbereich 37 zum Befestigen eines Schlauches aufweist, in gleicher Weise befestigt.

Hierzu wird ein Innenrohr 35 des jeweiligen Verbindungselements in Axialrichtung des Innenrohrs bzw. Anschlusses (horizontal in Fig. 3) in eine Durchgangsöffnung des entsprechenden der Anschlüsse 11-14 eingeführt, bis eine Rastverbindung selbsttätig verriegelt, indem ein federnder Sicherungsring 50 in eine Umfangsnut des Gehäuses einrastet, wobei ein Flansch 36 des Verbindungselements den Anschluss übergreift und zwischen dem Flansch 36 und dem Anschluss ein zweiteiliges Dichtmittel in Form zweier Dichtringe 60 angeordnet ist.

Dabei wird eine an einer Stirnseite des Innenrohrs 35 befestigte Dichtung 40 mit einer stellgliedseitigen Beschichtung 41 zwischen dem Innenrohr 35 und dem Stellglied 20 elastisch komprimiert und dichtet so das jeweilige Innenrohr 35 an der Außenkontur des Stellglieds 20 ab.

In einer in Fig. 2A skizzierten ersten Stellgliedstellung verbindet die erste Passage 21 des Stellglieds 20 einen ersten Anschluss 11 und einen zweiten Anschluss 12 bzw. die darin eingeführten Innenrohre 35 miteinander, die zweite Passage 22 einen dritten Anschluss 13 und einen vierten Anschluss 14 bzw. die darin eingeführten Innenrohre 35 miteinander.

In einer in Fig. 2B skizzierten weiteren Stellgliedstellung verbindet die erste Passage 21 des Stellglieds den ersten und dritten Anschluss 11, 13 miteinander, die zweite Passage 22 den zweiten und vierten Anschluss 12, 14.

In einer in Fig. 2C skizzierten weiteren Stellgliedstellung sperrt das Stellglied aller vier Anschlüsse 11-14.

Obwohl in der vorhergehenden Beschreibung exemplarische Ausführungen erläutert wurden, sei darauf hingewiesen, dass eine Vielzahl von Abwandlungen möglich ist.

So sind insbesondere die skizzierten Passagen(führungen) bzw. Schaltstellungen eine mögliche, vorteilhafte Ausführung, wobei auch andere Passagen(führungen) möglich und gegebenenfalls vorteilhaft sind, beispielsweise eine Verbindung des ersten mit dem vierten sowie des zweiten mit dem dritten Anschluss in der in Fig. 2A gezeigten Stellgliedstellung und eine entsprechende Sperrung aller Anschlüsse in der in Fig. 2C gezeigten Stellgliedstellung.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Gehäusegrundkörper
- 11: erster Anschluss
- 12: zweiter Anschluss
- 13: dritter Anschluss
- 14: vierter Anschluss
- 15: Deckel
- 16: Kavität
- 20: Stellglied
- 21: erste Passage
- 22: zweite Passage
- 31-34: Verbindungselement
- 35: Innenrohr
- 36: Flansch
- 37: Verbindungsbereich
- 40: Dichtung
- 41: Beschichtung
- 50: Sicherungsring (Rastverbindung)
- 60: Dichtmittel
- D: Drehachse

## Patentansprüche

1. Stellventil, insbesondere für druckbeaufschlagte Fluide, das
- ein Gehäuse (10-15) mit wenigstens zwei Anschlüssen (11-14);
- wenigstens ein an dem Gehäuse befestigtes Verbindungselement (31-34) mit einem in einen dieser Anschlüsse eingeführten Innenrohr (35);
- ein bewegliches Stellglied (20) mit einer ersten Passage (21), die in einer ersten Stellgliedstellung einen ersten und einen zweiten dieser Anschlüsse miteinander verbindet und in wenigstens einer weiteren Stellgliedstellung diese beiden Anschlüsse nicht miteinander verbindet; und
eine Dichtung (40), die zwischen dem Innenrohr und dem Stellglied angeordnet und an dem Innenrohr befestigt ist, aufweist,
**dadurch gekennzeichnet, dass**
das Verbindungselement einen Flansch (36), der den Anschluss übergreift, aufweist und mittels einer Rastverbindung (50) an dem Gehäuse befestigt ist.

2. Stellventil nach Anspruch 1, **dadurch gekennzeichnet, dass** die Dichtung zwischen dem Innenrohr und dem Stellglied komprimiert ist.

3. Stellventil nach einem der vorhergehenden Ansprüche, **dadurch gekennzeichnet, dass** die Dichtung Kunststoff, insbesondere ein Elastomer, und/oder eine, insbesondere stellgliedseitige, Beschichtung (41) aufweist.

4. Stellventil nach einem der vorhergehenden Ansprüche, **dadurch gekennzeichnet, dass** das Verbindungselement einen außerhalb des Gehäuses liegenden Verbindungsbereich (37), insbesondere zum Befestigen eines Schlauches, aufweist und/oder zerstörungsfrei lösbar oder nicht zerstörungsfrei lösbar an dem Gehäuse befestigt ist.

5. Stellventil nach einem der vorhergehenden Ansprüche, **dadurch gekennzeichnet, dass** das Verbindungselement mittels einer selbsttätig verriegelnden Rastverbindung (50) an dem Gehäuse befestigt ist.

6. Stellventil nach einem der vorhergehenden Ansprüche, **dadurch gekennzeichnet, dass** das Stellglied in die Stellgliedstellungen verdrehbar ist, insbesondere wenigstens ein die Dichtung kontaktierender Bereich des Stellglieds eine zu dessen Drehachse rotationssymmetrische Außenkontur aufweist.

7. Stellventil nach einem der vorhergehenden Ansprüche, **dadurch gekennzeichnet, dass** das Gehäuse wenigstens drei, insbesondere wenigstens vier Anschlüsse (11-14), aufweist, wobei die erste Passage (21) des Stellglieds in einer Stellgliedstellung den ersten Anschluss (11) mit einem dritten (13) dieser Anschlüsse verbindet und/oder das Stellglied in einer Stellgliedstellung den ersten Anschluss gegen alle anderen Anschlüsse des Gehäuses sperrt und/oder das Stellglied eine zweite Passage (22) aufweist, die in der ersten Stellgliedstellung einen dritten (13) und einen vierten (14) dieser Anschlüsse miteinander verbindet und in wenigstens einer anderen Stellgliedstellung diese beiden Anschlüsse nicht miteinander verbindet.

8. Stellventil nach einem der vorhergehenden Ansprüche, **dadurch gekennzeichnet, dass** in wenigstens zwei der Anschlüsse des Gehäuses jeweils ein Innenrohr eines an dem Gehäuse befestigten Verbindungselements eingeführt ist und eine Dichtung zwischen diesem Innenrohr und dem Stellglied angeordnet ist.

9. Hydrauliksystem mit wenigstens einem Stellventil nach einem der vorhergehenden Ansprüche, insbesondere zum Steuern eines hydraulischen Temperiersystems eines Kraftfahrzeugs.

10. Kraftfahrzeug mit wenigstens einem Stellventil nach einem der vorhergehenden Ansprüche 1 bis 8, insbesondere zum Steuern eines hydraulischen Temperiersystems des Kraftfahrzeugs.

11. Verfahren zum Montieren eines Stellventils nach einem der vorhergehenden Ansprüche 1 bis 8, **dadurch gekennzeichnet, dass** das Innenrohr (35) wenigstens eines Verbindungselements (31-34) in einen der Anschlüsse (11-14) des Gehäuses (10-15) eingeführt und dieses Verbindungselement an dem Gehäuse befestigt wird.

## Claims

1. Control valve, in particular for pressurized fluids, having
- a housing (10-15) with at least two ports (11-14) ;
- at least one connecting element (31-34) which is fastened to the housing and has an inner tube (35) inserted in one of said ports;
- a movable control element (20) with a first passage (21) which, in a first control-element position, interconnects a first one and a second one of said ports and, in at least one further control-element position, does not interconnect these two ports; and
a seal (40) which is arranged between the inner tube and the control element and is fastened to the inner tube,
**characterized in that**
the connecting element has a flange (36), which engages over the port, and is fastened to the housing by means of a latching connection (50).

2. Control valve according to Claim 1, **characterized in that** the seal is compressed between the inner tube and the control element.

3. Control valve according to either of the preceding claims, **characterized in that** the seal comprises plastic, in particular an elastomer, and/or a coating (41) which is in particular on the control-element side.

4. Control valve according to one of the preceding claims, **characterized in that** the connecting element has a connecting region (37), in particular for fastening of a hose, which connecting region is situated outside the housing, and/or is fastened to the housing so as to be detachable without destruction or so as not to be detachable without destruction.

5. Control valve according to one of the preceding claims, **characterized in that** the connecting element is fastened to the housing by means of an automatically locking latching connection (50).

6. Control valve according to one of the preceding claims, **characterized in that** the control element is able to be rotated into the control-element positions, in particular at least one region, contacting the seal, of the control element having an outer contour which is circularly symmetrical with respect to its axis of rotation.

7. Control valve according to one of the preceding claims, **characterized in that** the housing has at least three, in particular at least four, ports (11-14), wherein, in one control-element position, the first passage (21) of the control element connects the first port (11) to a third one (13) of said ports and/or, in one control-element position, the control element blocks the first port with respect to all the other ports of the housing, and/or the control element has a second passage (22) which, in the first control-element position, interconnects a third one (13) and a fourth one (14) of said ports and, in at least one other control-element position, does not interconnect these two ports.

8. Control valve according to one of the preceding claims, **characterized in that**, in at least two of the ports of the housing, in each case one inner tube of a connecting element fastened to the housing is inserted and a seal is arranged between said inner tube and the control element.

9. Hydraulic system having at least one control valve according to one of the preceding claims, in particular for controlling a hydraulic temperature-control system of a motor vehicle.

10. Motor vehicle having at least one control valve according to one of preceding Claims 1 to 8, in particular for controlling a hydraulic temperature-control system of the motor vehicle.

11. Method for assembling a control valve according to one of preceding Claims 1 to 8, **characterized in that** the inner tube (35) of at least one connecting element (31-34) is inserted into one of the ports (11-14) of the housing (10-15) and said connecting element is fastened to the housing.

## Revendications

1. Soupape de régulation, en particulier pour fluides sous pression, qui présente
- un carter (10-15) doté d'au moins deux raccords (11-14) ;
- au moins un élément de liaison (31-34) fixé au carter et doté d'un tube intérieur (35) introduit dans l'un de ces raccords ;
- un organe de régulation (20) mobile doté d'un premier passage (21) qui, dans une première position d'organe de régulation, relie l'un à l'autre un premier et un deuxième de ces raccords et, dans au moins une autre position d'organe de régulation, ne relie pas ces deux raccords l'un à l'autre ; et
un joint d'étanchéité (40) qui est disposé entre le tube intérieur et l'organe de régulation et est fixé au tube intérieur,
**caractérisée en ce que**
l'élément de liaison présente une bride (36) qui chevauche le raccord et est fixée au carter au moyen d'une liaison par encliquetage (50).

2. Soupape de régulation selon la revendication 1, **caractérisée en ce que** le joint d'étanchéité est comprimé entre le tube intérieur et l'organe de régulation.

3. Soupape de régulation selon l'une des revendications précédentes, **caractérisée en ce que** le joint d'étanchéité présente une matière synthétique, en particulier un élastomère, et/ou un revêtement (41) en particulier côté organe de régulation.

4. Soupape de régulation selon l'une des revendications précédentes, **caractérisée en ce que** l'élément de liaison présente une région de liaison (37) située à l'extérieur du carter, en particulier pour la fixation d'un tuyau souple et/ou est fixé au carter de manière amovible sans destruction ou de manière amovible avec destruction.

5. Soupape de régulation selon l'une des revendications précédentes, **caractérisée en ce que** l'élément de liaison est fixé au carter au moyen d'une liaison par encliquetage (50) se verrouillant automatiquement.

6. Soupape de régulation selon l'une des revendications précédentes, **caractérisée en ce que** l'organe de régulation peut tourner dans les positions d'organe de régulation, en particulier au moins une région, venant en contact avec le joint d'étanchéité, de l'organe de régulation présente un contour extérieur à symétrie de révolution par rapport à son axe de rotation.

7. Soupape de régulation selon l'une des revendications précédentes, **caractérisée en ce que** le carter présente au moins trois, en particulier au moins quatre raccords (11-14), le premier passage (21) de l'organe de régulation, dans une position d'organe de régulation, reliant le premier raccord (11) à un troisième (13) de ces raccords et/ou l'organe de régulation, dans une position d'organe de régulation, bloquant le premier raccord par rapport à tous les autres raccords du carter et/ou l'organe de régulation présentant un deuxième passage (22) qui, dans la première position d'organe de régulation, relie l'un à l'autre un troisième (13) et un quatrième (14) de ces raccords et, dans au moins une autre position d'organe de régulation, ne relie pas ces deux raccords l'un à l'autre.

8. Soupape de régulation selon l'une des revendications précédentes, **caractérisée en ce que** respectivement un tube intérieur d'un élément de liaison fixé au carter est introduit dans au moins deux des raccords du carter et un joint d'étanchéité est disposé entre ce tube intérieur et l'organe de régulation.

9. Système hydraulique doté d'au moins une soupape de régulation selon l'une des revendications précédentes, en particulier pour la commande d'un système de thermorégulation hydraulique d'un véhicule automobile.

10. Véhicule automobile doté d'au moins une soupape de régulation selon l'une des revendications précédentes 1 à 8, en particulier pour la commande d'un système de thermorégulation hydraulique du véhicule automobile.

11. Procédé de montage d'une soupape de régulation selon l'une des revendications précédentes 1 à 8, **caractérisé en ce que** le tube intérieur (35) d'au moins un élément de liaison (31-34) est introduit dans l'un des raccords (11-14) du carter (10-15) et cet élément de liaison est fixé au carter.
